# EUROPÄISCHE PATENTSCHRIFT

(11) **EP 2 167 405 B1**
(45) Veröffentlichungstag und Bekanntmachung des Hinweises auf die Patenterteilung: **27.06.2012**
(21) Anmeldenummer: 08702208.3
(22) Anmeldetag: 09.01.2008
(51) Int. Cl.: B65G 1/04, B66F 9/07

(54) **VORRICHTUNG ZUM EIN- UND AUSLAGERN EINES LAGERGUTS**
DEVICE FOR THE STORAGE AND RETRIEVAL OF A STORED MATERIAL
DISPOSITIF POUR CHARGER ET DECHARGER UN PRODUIT EN STOCK

(30) Priorität: 05.07.2007 RU 2007125414
(43) Veröffentlichungstag der Anmeldung: 31.03.2010
(73) Patentinhaber: Vozrozhdenie Industrii, 125080 Moscow (RU)
(72) Erfinder: HROMOV, Georgi, 123308 Moscow (RU); KHOUDYAK, Oleg, 123308 Moscow (RU); NIKIFOROV, Boris, 117308 Moscow (RU)
(74) Vertreter: Weiss, Peter
(86) Internationale Anmeldenummer: PCT/IB2008/000044
(87) Internationale Veröffentlichungsnummer: WO 2009/004413

(56) Entgegenhaltungen:
- DE-B- 1 044 712
- US-A- 3 593 823
- US-A- 3 662 860
- US-A- 3 954 185
- US-A- 5 839 873
- US-A1- 2004 216 957

## Beschreibung

Die Erfindung betrifft eine Vorrichtung zum Ein- und Auslagern eines Lagerguts in bzw. aus einem Regal, nach den Merkmalen des Oberbegriffs des Anspruchs 1

### STAND DER TECHNIK

Die vorliegende Erfindung gehört in dem Bereich der Hebe- und Transportmaschinen, insbesondere zu den hängenden Regalbediengeräten (Staplerkammer) und kann in Hochregallagern beliebiger Abmessungen eingesetzt werden. Ebenso kann die Erfindung auch für den automatisierten Transport von Gütern in anderen technologischen Prozessen genutzt werden.

Es sind hängende Hebe- und Transportgeräte bekannt, die aus einem Transportwagen an einem vertikalen Rahmen bestehen und mit einem Greifer für die Ware ausgestattet sind (M. P. Alexandrov "Hebe- und Transportmaschinen", Moskau 1985). Die Nachteile dieser Konstruktion sind grosse Abmessungen, Materialintensität und der begrenzte Aktionsradius innerhalb der Abstände zwischen den Regalen.

Aus der RU 2076841 ist ferner eine hängende Aufzugs- und Transportvorrichtung bekannt, die aus einem Transportwagen mit vertikalem Mast besteht, an dem eine Hebeeinrichtung einschliesslich einer verschiebbaren Ladefläche befestigt ist. Nachteilig bei dieser Konstruktion ist die Notwendigkeit der Vergrösserung der Abstände zwischen den Regalen für den Schwenkradius der ausfahrbaren Lastaufnahmefläche und die unstabile Lage der vertikalen Laststange, die auf einer Monoschiene aufgehängt ist.

Sowohl die US 3,662,860 wie auch die US 3,954,185 zeigen Vorrichtungen zum Ein- und Auslagern von Ladegut aus einem bzw. aus mehreren Regalen. Diese Vorrichtungen weisen eine Aufnahmefläche auf, die mittels eines Wagen auf Schienen vor den Regalen bewegt und verschoben werden kann. Nachteiliger Weise können die Wagen der beiden gezeigten Vorrichtungen nur auf gerade verlegten Schienen eingesetzt werden. Damit ist es nicht möglich, die Vorrichtung zum Ein- und Auslagern eines Ladeguts auch um Kurven und Bögen bzw. auf kurvig und bogenförmig verlegten Schienen zu befahren bzw. einzusetzen.

Des weiteren beschreibt auch die US 3,593,823 eine Vorrichtung zur Entnahme von Lagergut aus einem Regal. Im Gegensatz zu den bereits beschriebenen Vorrichtungen ist bei dieser Vorrichtung die Stabilität und Führung dadurch verbessert, dass die vertikale Führung über einen Kragarm mit einem Laufwagen verbunden ist. Dieser Kragarm wird zudem über einen Laufwagen in einer Schiene in bzw. an dem Regal geführt.

Den nächstliegenden Stand der Technik zur vorliegenden Anmeldung stellt die US 2004/0216957 A1 dar. Diese zeigt eine Vorrichtung der oben genannten Art. Der Wagen ist einer vertikalen Führung zugeordnet. Diese wird über jeweils einen Laufwagen an horizontalen Schienen am Regal geführt. Allerdings sind die Laufwägen selbst starr ausgeführt. Damit ist das Abfahren von kurvigen Schienen nicht möglich.

### AUFGABE

Aufgabe der vorliegenden Erfindung ist es, eine Vorrichtung der o.g. Art zu schaffen, die in verschiedenen Räumen mit beliebigen Abmessungen und Anordnungen der Regale, einschliesslich einer gebogenen Form, einsetzbar ist und deren Nutzung auf andere technologische Prozesse ausgebreitet werden kann, sowie ein einheitliches automatisiertes Steuerungssystem für alle Operationen.

### LÖSUNG DER AUFGABE

Zur Lösung der Aufgabe führen die Merkmale des Anspruchs 1.

Die vertikale Führung ist über einen Kragarm mit einem Laufwagen verbunden und der Laufwagen besteht aus mehreren Teilen, die gelenkig miteinander verbunden sind.

Ein Aspekt der Erfindung liegt in der Ausgestaltung der Aufnahmefläche bzw. diesem gesamten Transportelement. Auf dieser Aufnahmefläche soll zumindest ein, bevorzugt zwei Wagen angeordnet sein, der/die quer zur Aufnahmefläche bewegbar sind. Dies geschieht teleskopartig, so dass kein zusätzlicher Raum für ein Schwenken der Aufnahmefläche benötigt wird. Die Aufnahmefläche und die Wägen sind nur so breit, wie es das Ladegut erfordert. Durch die teleskopartige Ausgestaltung kann ein relativ weiter Weg in das Regal überbrückt werden.

Zur Bewegung dieser Wägen, wobei auch mehr als zwei Wägen vorgesehen sein können, bieten sich diverse Antriebe an. Diese können hydraulisch, pneumatisch, elektromotorisch oder auch manuell betätigt werden. In einem bevorzugten Ausführungsbeispiel der Erfindung werden die Wägen und die Aufnahmefläche über zumindest einen Seilzug miteinander verbunden, wobei ein Seilzug die entgegengesetzten Ecken der beiden Wägen übers Kreuz miteinander verbindet, während ein weiterer Seilzug die entgegengesetzten Wägen eines unteren Wagens über Kreuz mit der Aufnahmefläche und im Anschluss daran mit dem Antrieb verbindet. Dies ist jedoch nur ein Ausführungsbeispiel, besticht aber durch seine Einfachheit.

Die Aufnahmefläche soll entlang einer vertikalen Führung bewegbar sein. Diese vertikale Führung kann beispielsweise als Laststange ausgebildet sein, wobei sie seitliche Schienen für Rollen aufweist, mit denen die Aufnahmefläche die vertikale Führung umgreift.

Zum Bewegen der Aufnahmefläche entlang der vertikalen Führung befindet sich an der vertikalen Führung ein Antrieb, der beispielsweise über eine Kette mit der Aufnahmefläche verbunden ist. Die vertikale Führung wiederum ist über einen Kragarm mit dem Laufwagen verbunden. Auf diesen Laufwagen bezieht sich ein wesentlicher Teil der Erfindung. Der Laufwagen laüft eine Schiene ab, die in oder an dem Regal angeordnet ist. Dabei soll der Laufwagen der Schiene in jeder beliebigen Ausrichtung folgen. Zu diesem Zweck besteht der Laufwagen aus mehreren Teilen, die gelenkig miteinander verbunden sind. Drei Teile sind vorgesehen, nämlich eine zentrale Halterung, an der der Kragarm zur Halterung der vertikalen Führung festliegt. Beidseits der zentralen Halterung ist jeweils eine Eckhaltung vorgesehen. Halterung und Eckhaltung sind über Zwischenstücke und Scharniere miteinander verbunden, so dass der Laufwagen ohne weiteres auch einen Bogen der Schiene ablaufen kann.

Der Laufwagen bzw. seine einzelnen Teile stützen sich gegenüber der Schiene über Stützrollen ab, die beispielsweise angetrieben sein können. Den Stützrollen sollen wiederum andererseits der Schiene jeweils Klemmrollen zugeordnet sein, deren Anpressdruck je nach Verlauf der Schiene veränderbar ist. Hierzu befindet sich die Klemmrolle an einem Lagerprofil, welches gegenüber der Schiene schwenken kann. Ein freies Ende des Lagerprofils wird von einem federgelagerten Bolzen mit Anpressdruck beaufschlagt.

Bevorzugt soll auch das untere Ende der vertikalen Führung geführt sein. Hierzu ist eine Halterung mit einer Führungsrolle vorgesehen, welche einen Laufwinkel abläuft.

Die erfindungsgemässe Vorrichtung ist industrietauglich und kann in unterschiedlichen Lager- und Produktionshallen genutzt werden.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine teilweise dargestellte Seitenansicht eines Regals mit einer an dem Regal angeordneten erfindungsgemässen Vorrichtung zum Ein- und Auslagern eines Lagergutes;
Figur 2 eine Ansicht in eine Regallagerstrasse mit zwei sich gegenüberstehenden Regalen und der dazwischen angeordneten erfindungsgemässen Vorrichtung;
Figur 3 eine Draufsicht auf unterschiedliche Regal- bzw. Regalstrassenanordnungen;
Figur 4 eine Draufsicht auf einen erfindungsgemässen Laufwagen;
Figur 5 eine Draufsicht auf den Laufwagen gemäss Figur 4 in einer anderen Gebrauchslage;
Figur 6 eine Seitenansicht des Laufwagens gemäss den Figuren 4 und 5;
Figur 7 einen vergrössert dargestellten Ausschnitt aus dem Laufwagen;
Figur 8 einen vergrössert dargestellten Ausschnitt aus einem Teilbereich einer vertikalen Führung der erfindungsgemässen Vorrichtung im Bereich einer Aufnahmefläche;
Figur 9 eine schematische Darstellung eines Antriebs für zwei Wägen auf der Aufnahmefläche.

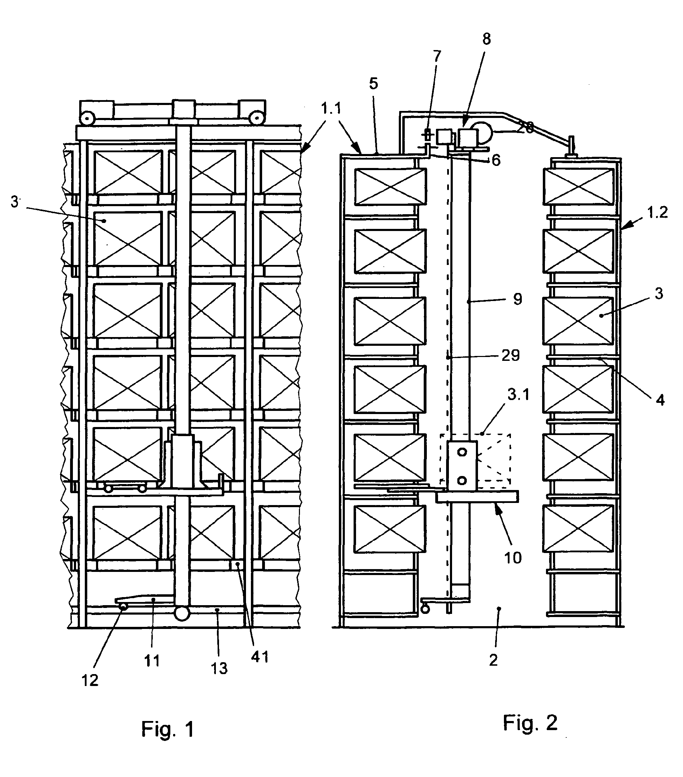

Gemäss den Figuren 1 und 2 sind Regale 1.1 und 1.2 dargestellt, wobei sich die Regale 1.1 und 1.2 gegenüberliegen. Sie lassen zwischen sich eine Regalstrasse 2 frei. Die Regale dienen der Aufnahme von Lagergütern 3, die jeweils zwischen Fachböden 4 angeordnet sind.

Auf einem oberen Regalabschluss 5 des Regals 1.1 ist eine Schiene 6 angeordnet, auf der Laufrollen 7 eines Laufwagens 8 abrollen können. An diesem Laufwagen 8 hängt eine vertikale Führung 9, an der entlang eine Aufnahmefläche 10 bewegbar angeordnet ist. Diese Aufnahmefläche 10 dient dem Transport von einem gestrichelt angedeuteten Lagergut 3.1.

Im unteren Bereich der vertikalen Führung 9 ist eine Halterung 11 für zumindest eine Führungsrolle 12 vorgesehen, welche einen Laufwinkel 13 abläuft.

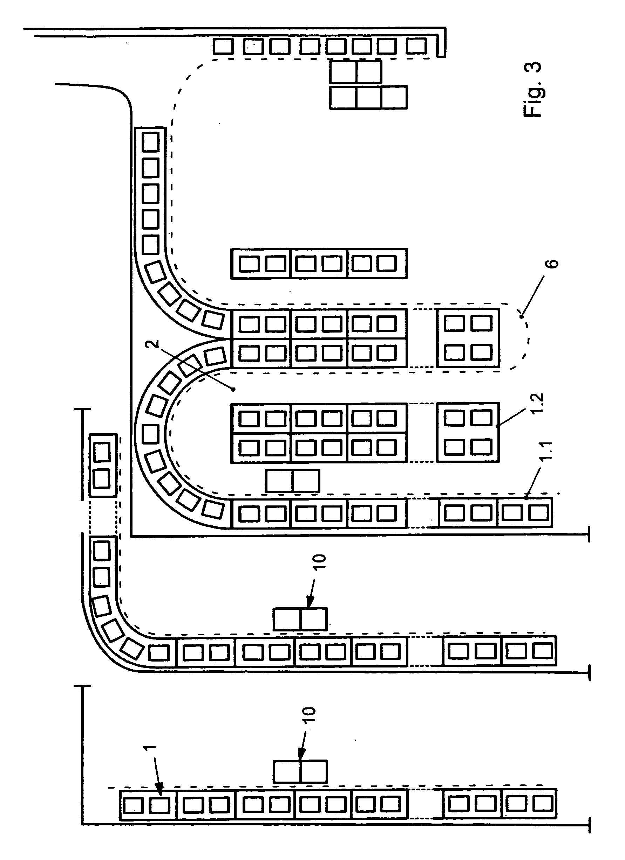

In Figur 3 sind eine Mehrzahl von Möglichkeiten der Anordnung von Regalen dargestellt, die teilweise gerade verlaufen, teilweise in einem Bogen. Entsprechend verläuft auch die Schiene 6, die gestrichelt angedeutet ist. Von der Transporteinrichtung für das Lagergut sind nur die Aufnahmeflächen 10 angedeutet.

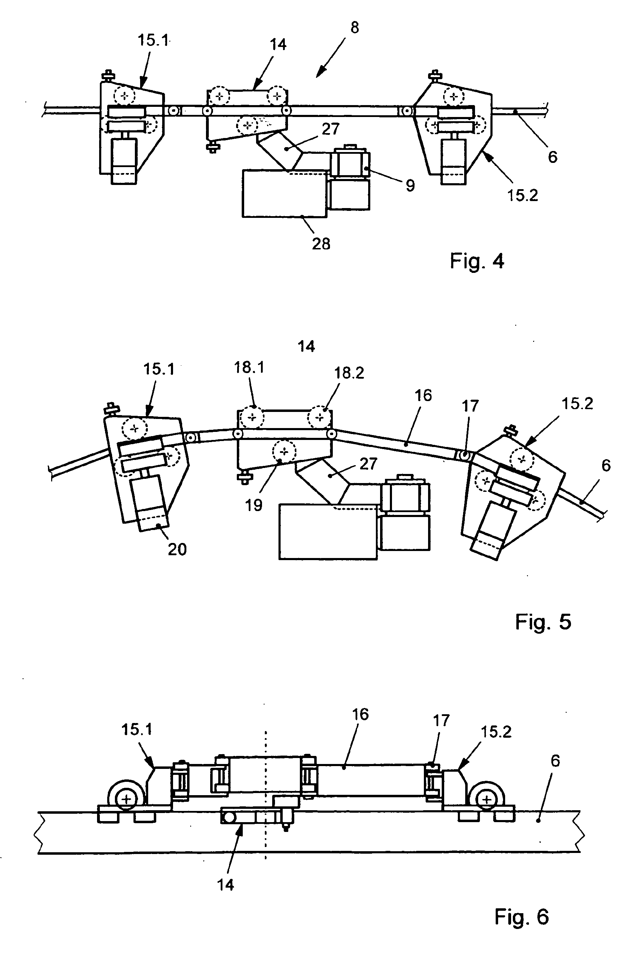

In den Figuren 4 bis 6 ist der Laufwagen 8 näher dargestellt. Er weist eine zentrale Halterung 14 mit beidseits angeordneten Eckhaltungen 15.1 und 15.2 auf. Diese drei Teile sind über Zwischenstücke 16 und Scharniere 17 miteinander verbunden. Des weiteren weisen sowohl die zentrale Halterung 14 als auch die Eckhaltungen 15.1 und 15.2 jeweils zwei Stützrollen einerseits der Schiene 6 als Stützrollen 18.1 und 18.2 sowie jeweils eine Klemmrolle 19 andererseits der Schiene 6 auf. Zumindest die Rollen 18 bzw. 19 der Eckhaltungen 15.1 und 15.2 sind zumindest teilweise über einen Antrieb 20 angetrieben.

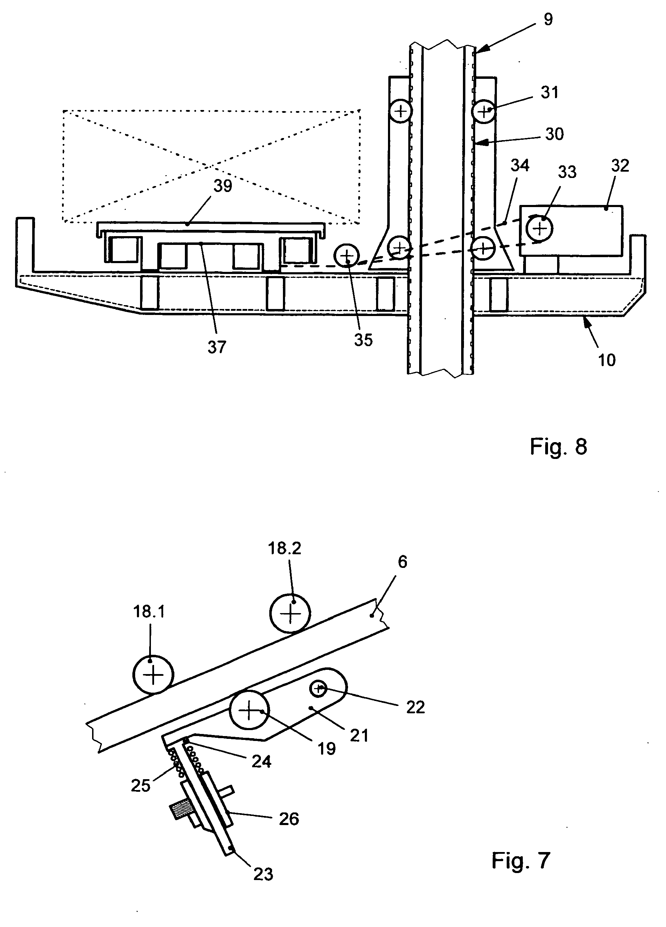

In Figur 7 ist ferner gezeigt, dass die Klemmrolle 19 federgelagert ist. Hierzu ist eine Lagerprofil 21 vorgesehen, an dem sich die Klemmrolle 19 drehbar befindet. Dieses Lagerprofil 21 kann um eine Achse 22 schwenken, wobei der Anpressdruck für die Klemmrolle 19 verändert wird. Andererseits der Achse 22 ist das Lagerprofil 21 von einem Bolzen 23 mit Druck beaufschlagt, wobei ein Bolzenkopf 24 unter dem Druck einer Schraubenfeder 25 steht. Diese Schraubenfeder 25 stützt sich andererseits des Bolzenkopfs 24 gegen eine Gleitlagerung 26 für den Bolzen 23 ab.

Zur Verbindung mit der vertikalen Führung 9 ragt von der zentralen Halterung 14 ein Kragarm 27 ab. Diesem Kragarm 27 ist ein Antrieb 28 für eine in Figur 2 gestrichelt dargestellte Kette 29 erkennbar, die mit der Aufnahmefläche 10 verbunden ist. Mittels des Antriebs 28 und der Kette 29 kann die Aufnahmefläche 10 entlang der vertikalen Führung 9 verschoben werden, wobei eine Laufeinrichtung 30 mit Rollen 31 die vertikale Führung 9 abläuft.

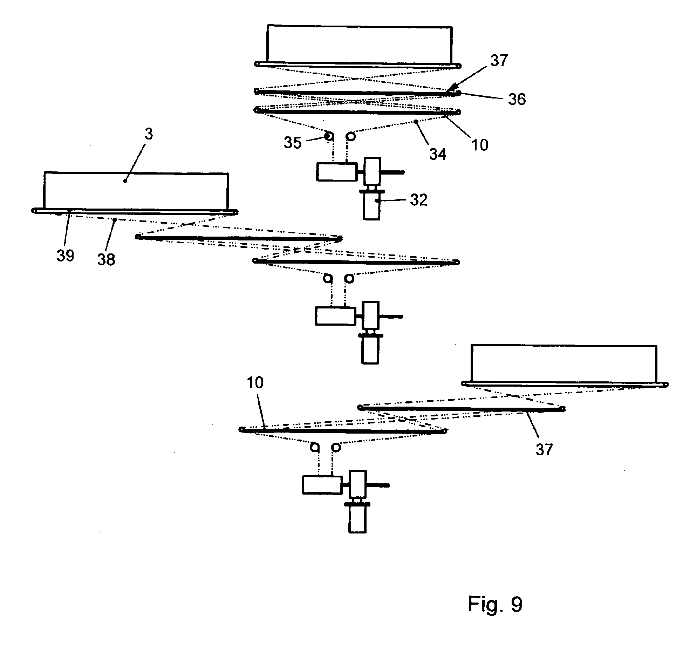

Auf der Aufnahmefläche 10 befindet sich ein weiterer Antrieb 32, dessen Antriebsrad 33 von einem Seilzug 34 umschlungen ist. Dieser Seilzug 34 läuft über Führungsrollen 35 und um weitere Umlenkrollen 36 der in Figur 9 nur schematisch dargestellten Aufnahmefläche 10 herum zu einem ersten Wagen 37. Die Verbindung zwischen der Aufnahmefläche 10 und dem ersten Wagen 37 geschieht übers Kreuz und in einer Doppelführung jeweils von einer Ecke der Aufnahmefläche 10 zu einer Ecke des Wagens 37.

Der Wagen 37 ist wiederum durch einen weiteren Seilzug 38 übers Kreuz mit einem zweiten Wagen 39 verbunden, auf dem schlussendlich ein Lagergut 3 ruht. Denkbar ist jedoch auch eine Fortführung des Seilzugs 34 bis zum zweiten Wagen 39 durch geeignete Führungen anstelle eines separaten Seilzugs 38.

Die Funktionsweise der vorliegenden Erfindung ist folgende:
Soll ein Lagergut 3 in einem der Regale 1 untergebracht werden, so wird es an einer nicht näher gekennzeichneten Beladestation auf den zweiten Wagen 39 der Aufnahmefläche 10 aufgelegt. Mittels einer entsprechenden Steuerung wird dann der Laufwagen 8 in Betrieb gesetzt, so dass er die Schiene 6 bis zu einer gewünschten Übergabestation abläuft. Infolge seiner gelenkigen Verbindung kann dieser Laufwagen 8 nicht nur gerade Schienen 6, sondern auch von der Schiene 6 gebildete Bögen ablaufen.

Hat der Laufwagen bzw. die Transporteinrichtung die gewünschte Position an einem Regal 1 erreicht, erfolgt nun ein Ansprechen des Antriebs 28, wodurch die Aufnahmefläche 10 in eine vorbestimmte vertikale Position an der vertikalen Führung 9 gebracht wird. Diese Position befindet sich unterhalb eines Fachbodens 4, auf den das Lagergut 3 übergeben werden soll.

Hat die Aufnahmefläche 10 ihre gewünschte Position erreicht, wird der Antrieb 32 angeregt und der Seilzug 34 in Tätigkeit versetzt. Durch die Verbindung des/der Seilzüge 34 bzw. 38 übers Kreuz mit den Ecken der Aufnahmefläche 10, dem Wagen 37 und dem Wagen 39 erfolgt eine teleskopartige Bewegung der Wagen 37 und 39 sowohl gegenüber der Aufnahmefläche 10 als auch gegenüber sich selbst.. D.h., mit dem Wagen 39 kann eine relativ lange Strecke überbrückt werden, so dass das Lagergut 3 tief in das Regal 1 eingebracht werden kann. Bei dieser Bewegung rollen die beiden Wägen 37 und 39 über entsprechende Laufrollen 40 sowohl die Aufnahmefläche 10 ab, als auch entsprechende Führungsschienen, die nicht näher gekennzeichnet sind.

Wie insbesondere in Figur 1 erkennbar, sind die Lagergüter 3 durch entsprechende Abstandshalter 41 von dem jeweiligen Fachboden 4 beabstandet. D.h., die erfindungsgemässe Transporteinrichtung kann auch zur Entnahme von Lagergütern 3 aus den Regalen 1 verwendet werden. In diesem Fall wird der Wagen 39 wiederum teleskopartig unter das jeweilige Lagergut 3 zwischen zwei Abstandshaltern 41 eingeschoben und sodann die Aufnahmefläche 10 entlang der vertikalen Führung 9 etwas angehoben, so dass auch das Lagergut 3 von den Abstandshaltern 41 abgehoben wird. Die Seilzüge 34 bzw. 38 werden dann mittels des Antriebs 32 eingeholt, so dass die Wägen 39 und 37 gegenüber der Aufnahmefläche 10 sich wiederum teleskopartig zusammenschieben. Das Lagergut kann dann zu einer Entladestation transportiert und dort von der Aufnahmefläche 10 abgenommen werden.

### Bezugszeichenliste

| | | | | | |
|---|---|---|---|---|---|
| 1 | Regal | 34 | Seilzug | 67 | |
| 2 | Regalstrasse | 35 | Führungsrolle | 68 | |
| 3 | Lagergut | 36 | Umlenkrolle | 69 | |
| 4 | Fachboden | 37 | Wagen | 70 | |
| 5 | Regalabschluss | 38 | Seilzug | 71 | |
| 6 | Schiene | 39 | Wagen | 72 | |
| 7 | Laufrolle | 40 | Laufrolle | 73 | |
| 8 | Laufwagen | 41 | Abstandshalter | 74 | |
| 9 | vertikale Führung | 42 | | 75 | |
| 10 | Aufnahmefläche | 43 | | 76 | |
| 11 | Halterung | 44 | | 77 | |
| 12 | Führungsrolle | 45 | | 78 | |
| 13 | Laufwinkel | 46 | | 79 | |
| 14 | zentrale Halterung | 47 | | | |
| 15 | Eckhaltung | 48 | | | |
| 16 | Zwischenstück | 49 | | | |
| 17 | Scharnier | 50 | | | |
| 18 | Stützrolle | 51 | | | |
| 19 | Klemmrolle | 52 | | | |
| 20 | Antrieb | 53 | | | |
| 21 | Lagerprofil | 54 | | | |
| 22 | Achse | 55 | | | |
| 23 | Bolzen | 56 | | | |
| 24 | Bolzenkopf | 57 | | | |
| 25 | Schraubenfeder | 58 | | | |
| 26 | Gleitlagerung | 59 | | | |
| 27 | Kragarm | 60 | | | |
| 28 | Antrieb | 61 | | | |
| 29 | Kette | 62 | | | |
| 30 | Laufeinrichtung | 63 | | | |
| 31 | Rollen | 64 | | | |
| 32 | Antrieb | 65 | | | |
| 33 | Antriebsrad | 66 | | | |

## Patentansprüche

1. Vorrichtung zum Ein- und Auslagern eines Lagerguts (3) in bzw. aus einem Regal (1.1, 1.2), welches eine Mehrzahl von Fachböden (4) aufweist, an denen entlang eine Aufnahmefläche (10) für das Lagergut (3) verfahrbar angeordnet ist, wobei die Aufnahmefläche (10) entlang einer vertikalen Führung (9), bewegbar angeordnet ist, wobei die vertikale Führung (9) mit einem Laufwagen (8) verbinden ist, der aus mehreren Teilen (14, 15.1, 15.2) besteht, die gelenkig miteinander verbunden sind, wobei der Laufwagen (8) eine Schiene (6) abläuft,
**dadurch gekennzeichnet,**
**dass** die Aufnahmefläche (10) in das und/oder aus dem Regal (1.1, 1.2) bewegbar angeordnet ist;
**dass** die vertikale Führung (9) über einen Kragarm (27) mit dem Laufwagen (8) verbunden ist; und dass die Schiene (6) in oder an dem Regal (1.1, 1.2) angeordnet ist und teilweise in einem Bogen verläuft, wobei der Laufwagen (8) eine zentrale Halterung (14) und beidseits je eine Eckhaltung (15.1, 15.2) aufweist, wobei die zentrale Halterung (14) und die Eckhaltungen (15.1, 15.2) über Zwischenstücke (16) und Scharniere (17) derart miteinander verbunden sind, dass der Laufwagen (8) auch den von der Schiene (6) gebildeten Bogen ablaufen kann.

2. Vorrichtung nach Anspruch1, **dadurch gekennzeichnet, dass** der Laufwagen (8) die Schiene (6) mit Stützrollen (18.1, 18.2) abläuft.

3. Vorrichtung nach Anspruch 2, **dadurch gekennzeichnet, dass** den Stützrollen (18.1, 18.2) zumindest teilweise andererseits der Schiene (6) eine Klemmrolle (19) zugeordnet ist, die bevorzugt unter einem Anpressdruck steht.

4. Vorrichtung nach Anspruch 3, **dadurch gekennzeichnet, dass** zur Erzeugung des Anpressdrucks einem Lagerprofil (21) für die Klemmrolle (19) ein federgelagerter Bolzen (23) zugeordnet ist und bevorzugt das Lagerprofil (21) um eine Achse (22) schwenkt.

5. Vorrichtung nach wenigstens einem der Ansprüche 2 bis 4, **dadurch gekennzeichnet, dass** den Stützrollen (18.1, 18.2) zumindest ein Antrieb (20) zugeordnet ist.

6. Vorrichtung nach wenigstens einem der Ansprüche 1 bis 5, **dadurch gekennzeichnet, dass** die vertikale Führung (9) mit einem Laufwinkel (13) im unteren Bereich des Regals (1.1) verbunden ist.

7. Vorrichtung nach Anspruch 6, **dadurch gekennzeichnet, dass** an der vertikalen Führung (9) im unteren Bereich eine Halterung (11) für eine Führungsrolle (12) vorgesehen ist, welche den Laufwinkel (13) abläuft.

8. Vorrichtung nach wenigstens einem der Ansprüche 1 bis 7, **dadurch gekennzeichnet, dass** auf der Aufnahmefläche (10) zumindest ein Wagen (37, 39) angeordnet ist, der quer zur Aufnahmefläche (10) bewegbar ist, wobei der zumindest eine Waten (37, 39) mit einem Antrieb (32) verbunden ist.

9. Vorrichtung nach Anspruch 8, **dadurch gekennzeichnet, dass** zumindest zwei Wagen (37, 39) teleskopartig quer zur Aufnahmefläche (10) bewegbar sind.

10. Vorrichtung nach Anspruch 9, **dadurch gekennzeichnet, dass** die beiden Wagen (37, 39) mit Rollen (40) in Schienen geführt sind.

11. Vorrichtung nach Anspruch 10, **dadurch gekennzeichnet, dass** der Antrieb (32) auf der Aufnahmefläche (10) angeordnet ist.

12. Vorrichtung nach Anspruch 10 oder 11, **dadurch gekennzeichnet, dass** der Antrieb (32) über Seilzüge (34, 38) mit dem zumindest einen Wagen (37, 39) verbunden ist, wobei bevorzugt ein Seilzug (38) die entgegengesetzten Ecken der beiden Wagen (37, 39) übers Kreuz miteinander verbindet und ein weiterer Seilzug (34) die entgegengesetzten Ecken des unteren Wagens (37) übers Kreuz mit der Aufnahmefläche (10) und im Anschluss daran mit dem Antrieb (32) verbindet.

13. Vorrichtung nach wenigstens einem der Ansprüche 1 bis 12, **dadurch gekennzeichnet, dass** die vertikale Führung (9) als Laststange ausgebildet ist und seitliche Schienen für Rollen (31) aufweist, mit denen die Aufnahmefläche (10) die vertikale Führung (9) umgreift, wobei bevorzugt im oberen Bereich der vertikalen Führung (9) ein Antrieb (28) für die vertikale Bewegung der Aufnahmefläche (10) vorgesehen ist und wobei der Antrieb (28) über eine Kette (29) mit der Aufnahmefläche (10) verbunden ist.

## Claims

1. A device for the storage of storage goods (3) in a rack (1.1, 1.2) and for the removal of storage goods (3) from a rack (1.1, 1.2), which rack (1.1, 1.2) has a plurality of shelves (4) along which a receiving surface (10) for the storage goods (3) is movably arranged, wherein the receiving surface (10) is arranged so as to be movable along a vertical guide (9), wherein the vertical guide (9) is connected to a travelling carriage (8) consisting of a plurality of parts (14, 15.1, 15.2) connected to one another in an articulated manner, wherein the travelling carriage (8) travels along a rail (6), **characterised in that** the receiving surface (10) is arranged so as to be movable into and/or from the rack (1.1, 1.2); **in that** the vertical guide (9) is connected to the travelling carriage (8) via a cantilever arm (27); and **in that** the rail (6) is arranged in or on the rack (1.1, 1.2) and runs partially in a curve, wherein the travelling carriage (8) has a central holding device (14) and a respective corner holding means (15.1, 15.2) on either side, wherein the central holding device (14) and the corner holding means (15.1, 15.2) are connected to one another via intermediate pieces (16) and hinges (17) in such a manner that the travelling carriage (8) can also travel along the curve formed by the rail (6).

2. A device according to claim 1, **characterised in that** the travelling carriage (8) travels along the rail (6) by means of supporting rollers (18.1, 18.2).

3. A device according to claim 2, **characterised in that** a clamping roller (19) is associated with the supporting rollers (18.1, 18.2), at least partially on the other side of the rail (6), which clamping roller (19) is preferably under an application pressure.

4. A device according to claim 3, **characterised in that** to produce the application pressure, a spring-mounted bolt (23) is associated with a bearing profile (21) for the clamping roller (19) and the bearing profile (21) preferably pivots about an axis (22).

5. A device according to at least one of claims 2 to 4, **characterised in that** at least one drive (20) is associated with the supporting rollers (18.1, 18.2).

6. A device according to at least one of claims 1 to 5, **characterised in that** the vertical guide (9) is connected to a travelling angle (13) in the lower region of the rack (1.1).

7. A device according to claim 6, **characterised in that** a holding device (11) for a guide roller (12) is provided on the vertical guide (9), in the lower region of the latter, which guide roller (12) travels along the travelling angle (13).

8. A device according to at least one of clams 1 to 7, **characterised in that** at least one carriage (37, 39) is arranged on the receiving surface (10) and is movable transversely to the receiving surface (10), wherein the at least one carriage (37, 39) is connected to a drive (32).

9. A device according to claim 8, **characterised in that** at least two carriages (37, 39) are movable telescopically in a manner transverse to the receiving surface (10).

10. A device according to claim 9, **characterised in that** the two carriages (37, 39) are guided in rails by means of rollers (40).

11. A device according to claim 10, **characterised in that** the drive (32) is arranged on the receiving surface (10).

12. A device according to claim 10 or 11, **characterised in that** the drive (32) is connected to the at least one carriage (37, 39) via cable pulls (34, 38), wherein preferably one cable pull (38) connects the opposite corners of the two carriages (37, 39) crosswise to one another and another cable pull (34) connects the opposite corners of the lower carriage (37) crosswise to the receiving surface (10) and subsequent thereto to the drive (32).

13. A device according to at least one of claims 1 to 12, **characterised in that** the vertical guide (9) is in the form of a load bar and has lateral rails for rollers (31) with which the receiving surface (10) embraces the vertical guide (9), wherein preferably in the upper region of the vertical guide (9) there is provided a drive (28) for the vertical motion of the receiving surface (10) and wherein the drive (28) is connected to the receiving surface (10) via a chain (29).

## Revendications

1. Dispositif pour charger et décharger un produit à stocker (3) dans ou hors d'une étagère (1.1, 1.2) présentant une pluralité de fonds de casier (4) le long desquels est disposée de manière déplaçable une surface de réception (10) du produit à stocker (3), la surface de réception (10) étant disposée de manière déplaçable le long d'un guide vertical (9), le guide vertical (9) étant relié à un chariot (8) composé de plusieurs parties (14, 15.1, 15.2) connectées l'une à l'autre de manière articulée, le chariot (8) parcourant un rail (6),
**caractérisé par le fait**
**que** la surface de réception (10) est disposée de manière déplaçable dans et/ou hors de l'étagère (1.1, 1.2) ;
**que** le guide vertical (9) est relié, par l'intermédiaire d'un bras coudé (27), au chariot (8) ; et que le rail (6) est disposé dans ou sur l'étagère (1.1, 1.2) et s'étend partiellement selon une courbe, le chariot (8) présentant un support central (14) et, de part et d'autre, un support de coin (15.1, 15.2), le support central (14) et les supports de coin (15.1, 15.2) étant reliés l'un à l'autre, par l'intermédiaire d'une pièce intermédiaire (16) et de charnières (17), de sorte que le chariot (8) puisse également parcourir la courbe formée par le rail (6).

2. Dispositif selon la revendication 1, **caractérisé par le fait que** le chariot (8) parcourt le rail (6) à l'aide de rouleaux de support (18.1,18.2).

3. Dispositif selon la revendication 2, **caractérisé par le fait qu'**aux rouleaux de support (18.1, 18.2) est associé du moins partiellement, de l'autre côté du rail (6), un rouleau de blocage (19) qui se trouve, de préférence, sous une pression de compression.

4. Dispositif selon la revendication 3, **caractérisé par le fait que** pour la génération de la pression de compression est associé à un profilé de montage (21) du rouleau de blocage (19) un boulon monté par ressort (23) et, de préférence, le profilé de montage (21) pivote autour d'un axe (22).

5. Dispositif selon au moins l'une des revendications 2 à 4, **caractérisé par le fait qu'**aux rouleaux de support (18.1, 18.2) est associé au moins un entraînement (20).

6. Dispositif selon au moins l'une des revendications 1 à 5, **caractérisé par le fait que** le guide vertical (9) est relié à une équerre de passage (13) dans la zone inférieure de l'étagère (1.1).

7. Dispositif selon la revendication 6, **caractérisé par le fait qu'**il est prévu sur le guide vertical (9), dans la zone inférieure, un support (11) d'un rouleau de guidage (12) qui parcours l'équerre de passage (13).

8. Dispositif selon au moins l'une des revendications 1 à 7, **caractérisé par le fait que** sur la surface de réception (10) est disposé au moins un chariot (37, 39) déplaçable transversalement à la surface de réception (10), l'au moins un chariot (37, 39) étant relié à un entraînement (32).

9. Dispositif selon la revendication 8, **caractérisé par le fait qu'**au moins deux chariots (37, 39) sont déplaçables de manière téléscopique transversalement à la surface de réception (10).

10. Dispositif selon la revendication 9, **caractérisé par le fait que** les deux chariots (37, 39) sont guidés par des rouleaux (40) dans des rails.

11. Dispositif selon la revendication 10, **caractérisé par le fait que** l'entraînement (32) est disposé sur la surface de réception (10).

12. Dispositif selon la revendication 10 ou 11, **caractérisé par le fait que** l'entraînement (32) est relié, par l'intermédiaire de tractions par câble (34, 38), à l'au moins un chariot (37, 39), de préférence une traction par câble (38) reliant l'un à l'autre en croix les coins opposés des deux chariots (37, 39) et une autre traction par câble (34) reliant en croix les coins opposés du chariot inférieur (37) à la surface de réception (10) et, ensuite, à l'entraînement (32).

13. Dispositif selon au moins l'une des revendications 1 à 12, **caractérisé par le fait que** le guide vertical (9) est réalisé sous forme de barre de charge et présente des rails latéraux pour rouleaux (31) par lesquels la surface de réception (10) vient en prise autour du guide vertical (9), dans la zone supérieure du guide vertical (9) étant, de préférence, prévu un entraînement (28) pour le déplacement vertical de la surface de réception (10) et l'entraînement (28) étant relié, par l'intermédiaire d'une chaîne (29), à la surface de réception (10).
